## Europäisches Patentamt
## European Patent Office
## Office européen des brevets

(19)

(11) Numéro de publication: **0154729 B1**

(12) **FASCICULE DE BREVET EUROPEEN**

(45) Date de publication du fascicule du brevet:
15.07.87

(51) Int. Cl.⁴: **C 09 D 5/34,** C 09 D 7/14, C 08 L 101/00, C 08 K 3/22

(21) Numéro de dépôt: **84201251.0**

(22) Date de dépôt: **30.08.84**

(54) **Additif pour compositions à base de dispersions aqueuses de hauts polymères, copolymères ou polycondensats et mélange obtenu.**

(30) Priorité: **22.02.84 BE 212444**

(43) Date de publication de la demande:
**18.09.85 Bulletin 85/38**

(45) Mention de la délivrance du brevet:
**15.07.87 Bulletin 87/29**

(84) Etats contractants désignés:
**AT CH DE FR GB IT LI LU NL SE**

(56) Documents cités:
**DE - A - 2 534 737
DE - B - 1 051 436
FR - A - 2 190 886
US - A - 3 749 692
US - A - 3 980 602**

(73) Titulaire: **Martin Mathys Naamloze Vennootschap, Kolenberg, B-3930 Zelem (BE)**

(72) Inventeur: **Rondou, Stephan, Galgenberg, 85, B-3290 Diest (BE)**

(74) Mandataire: **Thirion, Robert et al, Bureau GEVERS S.A. 7, rue de Livourne Bte 1, B-1050 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet un additif pour compositions à base de dispersions aqueuses dont le liant est constitué de hauts polymères, copolymères ou polycondensats contenant des groupes acides libres ou neutralisés.

Ces compositions, lorqu'elles sont utilisées seules ou en mélange avec des pigments, des charges, etc..., forment après évaporation de l'eau qu'elles contiennent, des films, revêtements ou masses présentant des propriétés variées qui permettent leur utilisation comme peintures, enduits, recouvrements, etc...

Beaucoup de ces polymères en dispersion aqueuse contiennent des groupes acides (en général carboxyliques) libres ou neutralisés par de l'ammoniaque ou des amines, ces groupes acides soit appartenant à des agents tensio actifs anioniques ajoutés lors du processus de polymérisation en phase aqueuse, soit faisant partie intégrante des polymères dans lesquels ils ont été incorporés sous forme de monomères acides (acides acrylique, méthacrylique, maléique, fumarique, etc...)

Ces compositions offrent l'inconvénient de présenter une sensibilité à l'eau inhérente à la présence dans les dispersions de polymères de matières solubles à l'eau (agent tensio-actif ou colloïdes protecteurs) ou de groupements hydrophiles qui restent présents dans les films, revêtements ou masses, après évaporation de l'eau.

L'invention a pour but de remédier à cet inconvénient et de procurer un additif aux compositions susdites qui est capable de réduire la sensibilité à l'eau et d'accélérer le séchage des peintures, enduits, recouvrements etc... réalisés à l'aide desdites compositions dont le liant est constitué de polymères, copolmères ou polycondensats en dispersion aqueuse contenant des groupements acides libres ou neutralisés par de l'ammoniaque ou des amines.

A cet effet, suivant l'invention, ledit additif comprend, dispersés dans une phase liquide non aqueuse, des oxydes, hydroxydes ou sels basiques de métaux bi-, tri- ou tétravalents choisis pour réagir avec les groupes acides des compositions susdites.

Suivant une forme de réalisation particulièrement avantageuse de l'invention, ledit additif comprend, pour assurer une dispersion stable des oxydes, hydroxydes ou sels basiques précités dans la phase liquide non aqueuse, un agent anti-déposant, tel que de l'huile de ricin hydrogénée.

L'invention a également pour objet une peinture, enduit ou recouvrement obtenu par mélange d'une composition et de l'additif précités.

D'autres détails et particularités de l'invention ressortiront de la description donnée ci-après, à titre d'exemples non limitatifs, d'additifs pour compositions suivant l'invention et de matériaux de recouvrement obtenus par mélange de ces derniers.

Les compositions concernées par la présente invention sont des compositions à base de dispersions aqueuses de hauts polymères, copolymères ou polycondensats ayant de préférence une bonne résistance à la saponification et qui peuvent être du type acrylique, méthacrylique, styrène-acrylique, ester vinylique, chlorure de vinyle ou de vinylidène, styrène-butadiène, acrylonitrile, polyuréthanne, chloroprène, néoprène, silicone, pris séparément ou en combinaison.

Ces compositions peuvent en outre contenir des composants, tels que pigments, charges, épaississants, plastifiants, mouillants, agents anti-mousse, agents de filmification.

En ce qui concerne l'additif suivant l'invention sa phase liquide non aqueuse contiendra comme liant des plastifiants ou résines (liquides ou solides) tels que les paraffines chlorées, les résines d'hydrocarbures, d'urée-formaldéhyde, de mélamine-formaldéhyde, les dérivés des acides polyacryliques et polyméthacryliques, les polyoléfines, les polymères de dioléfines conjuguées, les éthers du polypropylèneglycol, les résines vinyliques, les résines de cyclohexanone, le di- (phénoxy-éthyl) formal, le diméthyl-thioanthracène.

Les dérivés de métaux bi-, tri-, ou tétravalents entrant dans la composition dudit additif peuvent être, par exemple, de l'oxyde de zinc, de l'oxyde ou de l'hxdroxyde de calcium, de magnésium, d'aluminium, du ciment, de l'hydroxyde de baryum, de la litharge, ces dérivés, dispersés dans la phase liquide non aqueuse de l'additif réagissant avec les groupes acides de la composition susdite.

Pour assurer une dispersion stable des dérivés susdits dans la phase liquide non aqueuse de l'additif, il est utile d'y incoporer un agent anti-déposant, tel que de l'huile de ricin hydrogénée. Tandis que, pour abaisser la viscosité dudit additif, il peut être utile d'y ajouter des solvants qui seront choisis dans les solvants ne risquant pas de provoquer la coagulation des compositions précitées. Enfin, des huiles, siccatives et/ou des résines alkydes peuvent également être intégrées à l'additif à condition qu'elles n'excèdent pas, en poids, 30% du liant de ce dernier.

Le pourcentage des dérivés basiques de l'additif peut être compris entre 10 et 95% en poids. Par rapport au liant sec de la composition, le pourcentage des dérivés basiques de l'additif se situera entre 5 et 150% en poids et de préférence entre 10 et 70% en poids.

L'additif est ajouté progressivement à la composition, sous bonne agitation et au moment de l'emploi, ce qui provoque une augmentation progressive de la viscosité du mélange, la durée en pot de ce dernier pouvant varier de quelques minutes à plusieurs jours.

Les mélanges obtenus à partir des compositions et additifs suivant l'invention présentent l'avantage d'offrir une excellente résistance à l'eau et aux intempéries, ainsi qu'une excellente adhérence sur tous les supports minéraux. Ces mélanges conviennent particulièrement bien en tant que revêtements de sols, de toitures et de murs, ou encore comme masses de réparation pour béton.

*Exemple 1*

Cet exemple sert à illustrer une composition et un additif mélangés au moment de l'emploi, destinés à constituer un revêtement de sol à appliquer à la raclette ou à la taloche, en couches de 2 à 6 mm, ce revêtement formant, après durcissement, un revêtement très résistant à l'eau et à l'usure.

*Composition*

```
 400  parties de dispersion styrène-acrylique à 50%
        d'extrait sec
   3  parties d'ammoniaque à 25%
   1  partie d'hexamétaphosphate de soude
  15  parties d'oxyde de fer rouge
1500  parties de sable quartzeux de grains compris
        entre 0,3 à 0,4 mm
  20 - 50 parties d'eau
```

*Additif*

```
15   parties de polybutadiène
10   parties de white-spirit
 0,5 partie d'huile de ricin hydrogénée
50   parties de blanc de zinc (qualité «cachet
       rouge»).
```

On ajoute éventuellement au mélange une faible quantité d'eau pour faciliter son application.

*Exemple 2*

Cet exemple sert à illustrer une composition et un additif, mélangés au moment de l'emploi, destinés à constituer, après séchage dudit mélange, un produit souple et résistant à l'eau pouvant avantageusement être utilisé comme revêtement d'étanchéité pour toiture.

*Composition*

```
400  parties de dispersion acrylique à 50% d'extrait
       sec
  3  parties d'ammoniaque à 25%
  2  parties d'hexamétaphosphate
 10  parties d'oxyde de titane rutile
200  parties de sulfate de baryum.
```

*Additif*

```
20   parties de paraffine chlorée à 40% de chlore
12   parties de white-spirit
 0,5 partie d'huile de ricin hydrogénée
75   parties de ciment Portland P 50.
```

Il doit être entendu que l'invention n'est nullement limitée aux formes de réalisation décrites et que bien des modifications peuvent être apportées à ces dernières sans sortir du cadre du présent brevent.

**Revendications**

1. Additif pour compositions à base de dispersions aqueuses dont le liant est constitué de hauts polymères, copolymères ou polycondensats contenant des groupes acides libres ou neutralisés, caractérisé en ce qu'il comprend, dispersés dans une phase liquide non aqueuse, des oxydes, hydroxydes ou sels basiques de métaux bi-, tri-, ou tétravalents choisis pour réagir avec les groupes acides des compositions susdites.

2. Additif suivant la revendication 1, caractérisé en ce qu'il est combiné à des compositions à base de dispersions aqueuses du type acrylique, méthacrylique, styrène-acrylique, ester vinylique, chlorure de vinyle ou de vinylidène, styrène-butadiène, acrylonitrile, polyuréthanne, chloroprène, néoprène, silicone, pris séparément ou en combinaison.

3. Additif suivant l'une ou l'autre des revendications 1 et 2, caractérisé en ce qu'il est combiné à des compositions comprenant des composants tels que pigments, charges, épaississants, plastifiants, mouillants, agents anti-mousse, agents de filmification.

4. Additif suivant l'une quelconque des revendications 1 à 3, caractérisé en ce qu'il est combiné aux compositions susdites dont les hauts polymères, copolymères et polycondensats sont choisis parmi ceux qui présentent une bonne résistance à la saponification.

5. Additif suivant l'une quelconque des revendications 1 à 4, caractérisé en ce que la phase liquide non aqueuse est constituée de plastifiants, liants ou résines tels que les paraffines chlorées, les résines d'hydrocarbures, d'urée-formaldéhyde, de mélamine-formaldéhyde, les dérivés des acides polyacryliques et polyméthacryliques, les polyoléfines, les polymères de dioléfines conjuguées, les éthers du polypropylèneglycol, les résines vinyliques, les résines de cyclohexanone, le di- (phénoxy-éthyl) formal, le diméthylthioanthracène.

6. Additif suivant l'une quelconque des revendications 1 à 5, caractérisé en ce qu'il comprend des huiles siccatives et/ou des résines alkydes.

7. Additif suivant la revendication 6, caractérisé en ce que les huiles siccatives, les résines alkydes susdites constituent tout au plus 30% de la phase liquide non aqueuse de l'additif.

8. Additif suivant l'une quelconque des revendications 1 à 7, caractérisé en ce qu'il comprend, pour assurer une dispersion stable des oxydes, hydroxydes ou sels basiques précités dans la phase liquide non aqueuse, un agent anti-déposant, tel que de l'huile de ricin hydrogéneée.

9. Additif suivant l'une quelconque des revendications 1 à 8, caractérisé en ce qu'il comprend un solvant, celui-ci étant choisi de manière à ne pas provoquer la coagulation des compositions précitées.

10. Additif suivant l'une quelconque des revendications 1 à 9, caractérisé en ce que les dérivés de métaux bi-, tri- ou tétravalents précités sont choisis parmi l'oxyde de zinc, loxyde ou l'hydroxyde de calcium, de magnésium, l'aluminium, le ciment, l'hydroxyde de baryum, la litharge.

11. Additif suivant l'une quelconque des revendications 1 à 10, caractérisé en ce qu'il comprend de 10 à 95%, en poids, de dérivés basiques.

12. Additif suivant l'une quelconque des revendications 1 à 11, caractérisé en ce que par rapport au liant, à l'état sec, des compositions susdites, le pourcentage de dérivés basiques se situe entre 5 et 150% en poids.

13. Additif suivant la revendication 12, caractérisé en ce que par rapport au liant, à l'état sec, des compositions précitées, le pourcentage de dérivés basiques se situe entre 10 et 70% en poids.

14. Additif suivant l'une quelconque des revendications 1 à 13, caractérisé en ce que, pour une composition à base de dispersion aqueuse constituée de 400 parties de dispersion styrène-acrylique à 50% d'extrait sec, 3 parties d'ammoniaque à 25%, 1 partie d'hexamétaphosphate de soude, 15 parties d'oxyde de fer rouge, 1500 parties de sable quartzeux de grains compris entre 0,3 et 0,4 mm et de 20 à 100 parties d'eau, il comprend 15 parties de poly-butadiène, 10 parties de white-spirit, 0,5 partie d'huile de ricin hydrogénée et 50 parties de blanc de zinc.

15. Additif suivant l'une quelconque des revendications 1 à 13, caractérisé en ce que, pour une composition à base de 400 parties de dispersion acrylique à 50% d'extrait sec, 3 parties d'ammoniaque à 25%, 2 parties d'hexamétaphosphate, 10 parties d'oxyde de titane rutile et 200 parties de sulfate de baryum, il comprend 20 parties de paraffine chlorée à 40% de clore, 12 parties de white-spirit, 0,5 partie d'huile de ricin hydrogénée et 75 parties de ciment Portland P 50.

16. Additif suivant l'une quelcoque des revendications 1 à 15, caractérisé en ce qu'il est destiné à être incorporé progressivement aux compositions susdites, sous bonne agitation et au moment de l'emploi desdites compositions.

17. Peinture, enduit, recouvrement, caractérisé en ce qu'il est constitué par un mélange, préparé sous bonne agitation et au moment de l'emploi, d'une composition à base de dispersion aqueuse précitée à laquelle est ajouté progressivement l'additif suivant l'une quelconque des revendications 1 à 16.


**Patentansprüche**

1. Zusatz für Zusammensetzungen auf der Basis von wässrigen Dispersionen, deren Bindemittel aus Hochpolymeren, Copolymeren oder Polykondensaten besteht, welche freie oder neutralisierte Säuregruppen aufweisen, dadurch gekennzeichnet, dass er in einer flüssigen, nicht wässrigen Phase Oxide, Hydroxide oder basische Salze von zwei-, drei- oder vierwertigen Metallen dispergiert enthält, die so gewählt sind, dass sie mit den Säuregruppen der gesamten Zusammensetzungen reagieren.

2. Zusatz nach Anspruch 1, dadurch gekennzeichnet, dass er mit Zusammensetzungen auf der Basis von wässrigen Dispersionen vom Typ Acryl, Methacryl, Styrol-Acryl, Vinylester, Vinylchlorid oder Vinylidenchlorid, Styrol-Butadien, Acrylnitril, Polyurethan, Chloropren, Neopren, Silicon, einzeln oder im Gemisch, kombiniert ist.

3. Zusatz nach Anspruch 1 oder 2, dadurch gekennzeichnet, dass er mit Zusammensetzungen kombiniert ist, welche Bestandteile wie Pigmente, Füllstoffe, Verdickungsmittel, Weichmacher, Benetzungsmittel, Antischaummittel, Filmbildungsmittel enthalten.

4. Zusatz nach einem der Ansprüche 1 bis 3, dadurch gekennzeichnet, dass er mit solchen Zusammensetzungen kombiniert ist, deren Hochpolymere, Copolymere oder Polykondensate aus denen gewählt sind, die eine gute Beständigkeit gegen Verseifung aufweisen.

5. Zusatz nach einem der Ansprüche 1 bis 4, dadurch gekennzeichnet, dass die flüssige, nicht wässrige Phase aus Weichmachern, Bindemitteln oder Harzen, wie chlorierten Paraffinen, Kohlenwasserstoff-, Harnstoff-Formaldehyd-Melamin-Formaldehydharzen, Polyacrylsäure- und Polymethacrylsäurederivaten, Polyolefinen, Polymeren von konjugierten Diolefi-nen, Polypropylenglykoläthern, Vinylharzen, Cyclo-hexanonharzen, Di(phenoxyethyl)-formal und Dimethylthioanthracen bestehen.

6. Zusatz nach einem der Anprüche 1 bis 5, dadurch gekennzeichnet, dass er trocknende Öle und/oder Alkylharze enthält.

7. Zusatz nach Anspruch 6, dadurch gekennzeichnet, dass die trocknenden Öle oder die genannten Alkylharze insgesamt höchstens 30% der flüssigen, nicht wässrigen Phase des Zusatzes ausmachen.

8. Zusatz nach einem der Ansprüche 1 bis 7, dadurch gekennzeichnet, dass er zur Gewährleistung einer stabilen Dispersion der erwähnten Oxide, Hydroxide oder basischen Salze in der flüssigen, nicht wässrigen Phase ein Antiabsetzmittel, wie hydriertes Rizinusöl, aufweist.

9. Zusatz nach einem der Ansprüche 1 bis 8, dadurch gekennzeichnet, dass er ein Lösungsmittel enthält, das so gewählt ist, dass es keine Koagulation der erwähnten Zusammensetzungen bewirkt.

10. Zusatz nach einem der Ansprüche 1 bis 9, dadurch gekennzeichnet, dass die Derivate der erwähnten zwei-, drei- oder vierwertigen Metalle unter Zinkoxid, dem Oxid oder Hydroxid von Kalzium, Magnesium oder Aluminium, Zement, Bariumhydroxid oder Bleiglätte gewählt sind.

11. Zusatz nach einem der Ansprüche 1 bis 10, dadurch gekennzeichnet, dass er 10 bis 95 Gew.-% an basischen Derivaten enthält.

12. Zusatz nach einem der Ansprüche 1 bis 11, dadurch gekennzeichnet, dass, bezogen auf Bindemittel in trockenem Zustand der genannten Zusammensetzungen der Prozentsatz an basischen Derivaten zwischen 5 und 150 Gew.-% liegt.

13. Zusatz nach Anspruch 12, dadurch gekennzeichnet, dass, bezogen auf Bindemittel in trockenem Zustand der erwähnten Zusammensetzungen der Prozentsatz an basischen Derivaten zwischen 10 und 70 Gew.-% liegt.

14. Zusatz nach einem der Ansprüche 1 bis 13, dadurch gekennzeichnet, dass, für eine Zusammensetzung auf der Basis von wässriger Dispersion, die aus 400 Teilen Styrol-Acryldispersion mit 50% Trockengehalt, 3 Teilen 25%igem Ammoniak, 1 Teil Natriumhexametaphosphat, 15 Teilen rotem Eisenoxid, 1500 Teilen Quarzsand mit einer Körnung zwischen 0,3 und 0,4 mm und 10 bis 100 Teilen Wasser besteht, er 15 Teile Polybutadien, 10 Teile White-spirit (Lackbenzin), 0,5 Teile hydriertes Rizinöl und 50 Teile Zinkweiss enthält.

15. Zusatz nach einem der Ansprüche 1 bis 13, dadurch gekennzeichnet, dass, für eine Zusammensetzung auf der Basis von 400 Teilen Akryldispersion mit 50% Trockensubstanz, 3 Teilen 25%igem Ammoniak, 2 Teilen Hexametaphosphat, 10 Teilen Rutil-Titandioxid und 200 Teilen Bariumsulfat, er 20 Teile chloriertes Paraffin mit 40% Chlor, 12 Teile White-spirit (Lackbenzin), 0,5 Teile hydriertes Rizinusöl und 75 Teile Portlandzement P 50 enthält.

16. Zusatz nach einem der Ansprüche 1 bis 15, dadurch gekennzeichnet, dass er dazu bestimmt ist, nach und nach in diese Zusammensetzungen unter gutem Rühren und zum Zeitpunkt der Anwendung dieser Zusammensetzungen eingebracht zu werden.

17. Anstrichmittel, Überzug oder Beschichtung, dadurch gekennzeichnet, dass sie aus einer unter gutem Rühren zum Zeitpunkt der Anwendung hergestellten Mischung einer Zusammensetzung auf der Basis der erwähnten wässrigen Dispersion, der nach und nach der Zusatz gemäss einem der Ansprüche 1 bis 16 zugesetzt ist, bestehen.

## Claims

1. Additive for compositions based on aqueous dispersions the binder of which is made of high polymers, copolymers or polycondendates containing free or neutralized acid groups, characterized in that it comprises in dispersion in a non-aqueous liquid phase, oxides, hydroxides or basic salts of bi-, tri- or tetravalent metals selected so as to react with acid groups of said compositions.

2. Additive according to claim 1, characterized in that it is combined with compositions based on aqueous dispersions of the acrylic, methacrylic, styrene-acrylic, vinyl ester, vinyl or vinylidene chloride, styrene-butadiene, acrylonitrile, polyurethan, chloroprene, neoprene, silicone type, considered separately or in combination.

3. Additive according to either of claims 1 and 2, characterized in that it is combined with compositions comprising constituents such as pigments, fillers, thickeners, plasticizers, wetting agents, antifoam agents, film-formig agents.

4. Additive according to any of claims 1 to 3, characterized in that it is combined with abovementioned compositions the high polymers, copolymers and polycondensates of which are selected amongst those which have a good resistance to saponification.

5. Additive according to any of claims 1 to 4, characterized in that the non-aqueous liquid phase is made of plasticizers, binders or resins such as chlorinated paraffins, hydrocarborn resins, urea-formaldehyde resins, melamine-formaldehyde resins, polyacrylic and polymethacrylic acid derivatives, polyolefins, conjugated diolefin polymers, polypropylene glycol ethers, vinylic resins, cyclohexanone resins, di-(phenoxy ethyl) formal, dimethylthioanthracene.

6. Additive according to any of claims 1 to 5, characterized in that it comprises drying oils and/or alkyd resins.

7. Additive according to claim 6, characterized in that said drying oils, alkyd resins constitute 30% at the utmost of the non-aqueous liquid phase of the additive.

8. Additive according to any of claims 1 to 7, characterized in that it comprises, in order to ensure a stable dispersion of said oxides, hydroxides or basis salts in the non-aqueous liquid phase, an antidipositing agent, such as hydrogenated castor oil.

9. Additive according to any of claims 1 to 8, characterized in that it comprises a solvent which is selected so as not to cause coagulation of abovementioned compositions.

10. Additive according to any of claims 1 to 9, characterized in that the derivatives of bi-, tri- and tetravalent metals are selected from the group comprising zinc oxide, calcium, magnesium, aluminium oxide or hydroxide, cement, barium hydroxide, litharge.

11. Additive according to any of claims 1 to 10, characterized in that it comprises from 10 to 95% by weight of basic derivatives.

12. Additive according to any of claims 1 to 11, characterized in that the percentage of basic derivatives is between 5 to 100% by weight with respect to the dry state binder of said compositions.

13. Additive according to claim 12, characterized in that the percentage of basic derivatives is between 10 and 70% by weight with respect to the dry state binder of said compositions.

14. Additive according to any of claims 1 to 13, characterized in that it comprises 15 parts of polybutadiene, 10 parts of white spirit, 0.5 part of hydrogenated castor oil and 50 parts of zinc white for a composition based on aqueous dispersion made of 400 parts of 50% dry extract styrene-acrylic dispersion, 3 parts of 25% ammonia solution, 1 part of sodium hexametaphosphate, 15 parts of red iron oxide, 1500 parts of quartz sand the grain size of which is comprised between 0.3 and 0.4 mm and 20 to 100 parts of water.

15. Additive according to any of claims 1 to 13, characterized in that it comprises 20 parts of 40% chlorine chlorinated paraffin, 12 parts of white spirit, 0.5 part of hydrogenated castor oil and 75 parts of Portland ciment P 50 for a composition based on 400 parts of 50% dry state acrylic dispersion, 3 parts of 25% ammonia solution, 2 parts of hexametaphosphate, 10 parts of rutile titanium oxide and 200 parts of barium sulfate.

16. Additive according to any of claims 1 to 15, characterized in that it is intended to be gradually incorporated into said compositions under good stirring and at the moment of use of said compositions.

17. Paint, coating, covering, characterized in that it is made of a mixture prepared under good stirring and at the moment of use, of the above-mentioned composition based on aqueous dispersion to which the additive according to claims 1 to 16 is gradually added.